Europäisches Patentamt

European Patent Office

Office européen des brevets

(11) Publication number: **0 327 202**
**A2**

## EUROPEAN PATENT APPLICATION

(21) Application number: **89300109.9**

(22) Date of filing: **06.01.89**

(51) Int. Cl.⁴: **C08F 2/00**

(30) Priority: **08.01.88 JP 2347/88**

(43) Date of publication of application:
**09.08.89 Bulletin 89/32**

(84) Designated Contracting States:
**DE FR GB**

(71) Applicant: **Shin-Etsu Chemical Co., Ltd.**
**6-1, Ohtemachi 2-chome**
**Chiyoda-ku Tokyo 100(JP)**

(72) Inventor: **Shimizu, Toshihide**
**5-7-35 Shitte Chuo Kamisu-machi**
**Kashima-gun Ibaragi-ken(JP)**
Inventor: **Kaneko, Ichiro**
**3-9809-7 Honcho Hazaki-machi**
**Kashima-gun Ibaragi-ken(JP)**
Inventor: **Watanabe, Mikio**
**3-3-24 Shitte Chuo Kamisu-machi**
**Kashima-gun Ibaragi-ken(JP)**

(74) Representative: **Whalley, Kevin et al**
**MARKS & CLERK 57/60 Lincoln's Inn Fields**
**London WC2A 3LS(GB)**

(54) **Use of manganese compound to inhibit polymer build-up on reactor parts.**

(57) Polymer build-up on reactor walls and other parts wetted by a polymerisation mixture is inhibited by coating the walls and the wetted parts with a liquid containing a manganese compound prior to the polymerisation.

EP 0 327 202 A2

## USE OF MANGANESE COMPOUND TO INHIBIT POLYMER BUILD-UP ON REACTOR PARTS

The present invention relates to a method for inhibiting polymer deposition on the reactor walls and a stirrer during the polymerization of a monomer, particularly ethylenically unsaturated monomers.

It is a well-known problem that when a monomer is polymerized, a portion of the produced polymer deposits on the walls of the reactor, a stirrer and other parts wetted with the polymerization mixture to form polymer scale thereon. To remove this scale requires a considerable amount of labor and time. If this scale is permitted to build up on the reactor walls and the other wetted parts, the inevitable consequences are a decrease in the yield of the polymer product, a lowering of cooling capacity of the polymerization reactor and degradation of the quality of the polymer product as a result of contamination of the product with the scale.

Examples of the conventional methods for preventing polymer scale build-up on the wetted parts of the reactor include coating the wetted parts with a polar compound, a dye, or a pigment (Japanese Kokoku Nos. 45-30343, 45-30835); and with an aromatic amine (Japanese Kokai No. 51-50887); with a reaction product of a phenol compound and an aromatic aldehyde (Japanese Kokai No. 55-54317).

These methods are effective in preventing polymer scale formation when the polymerization involves a vinyl halide monomer such as vinyl chloride, or a monomer mixture consisting mainly of a vinyl halide monomer and a small amount of a monomer capable of copolymerizing with the halide monomer.

However, when the polymerization mixture comprises one or more of other particular ethylenically unsaturated monomers, such as styrene, α-methylstyrene, acrylic ester and acrylonitrile, the polymer-deposition inhibitor is partly or entirely dissolved in the monomer because these ethylenic compounds exhibit extremely high dissolving power towards the inhibitor. Hence, those coating materials fail to effectively prevent polymer deposition and scale formation on the wetted parts when the reactant monomer is styrene, α-methylstyrene, acrylic ester and/or acrylonitrile.

It is therefore an object of the invention to provide a method whereby it is possible to effectively inhibit and even completely prevent polymer scale deposition not only in polymerizations involving a vinyl halide monomer but also in polymerization involving other kinds of ethylenically unsaturated monomers.

In a method aspect, this invention relates to a method for inhibiting polymer build-up in a reactor in which a liquid polymerization mixture comprising a monomer is polymerized, on the parts of the reactor wetted by the polymerization mixture, which comprises coating the parts prior to the polymerization with an amount of a source of manganese ions effective to inhibit polymer build-up.

In an apparatus aspect, this invention relates to a reactor whose parts which are wetted by the polymerization mixture employed in polymerizations conducted therein bear on the surfaces thereof a coating of a manganese compound.

The source of the manganese ions can be any manganese compound, e.g., a manganese oxide, a manganese hydroxide, a manganese halide, a manganese oxyacid, an inorganic acid of manganese, or an organic acid of manganese. More particularly, any of the following manganese compounds is effective singly or in combination: manganese (II) oxide $MnO$, trimanganese tetroxide alpha phase $Mn_3O_4$ , manganese (III) oxide $\alpha M_2O_3$ , manganese (IV) oxide $\beta$ , pyrolusite $MnO_2$ , manganese trioxide $MnO_3$ , dimanganese heptoxide $Mn_2O_7$ , manganese tetraoxide $MnO_4$ , pentamanganese octoxide $Mn_5O_8$ ; manganese hydroxide $Mn(OH)_2$ , manganese (III) oxide $\gamma$ , hydrated $MnO(OH)$; manganese (II) fluoride $MnF_2$ , manganese (III) fluoride $MnF_3$ , manganese (II) chloride $MnCl_2$ , manganese (III) chloride $MnCl_3$ , manganese (II) bromide $MnBr_2$ , manganese (II) iodide $MnI_2$ ; potassium manganate (VI) $K_2MnO_4$ , sodium manganate (VI) $Na_2MnO_4$ , barium manganate (VI) $BaMnO_4$ ; potassium manganite $K_2MnO_3$ , barium manganate (V) $Ba_3(MnO_4)_2$ , potassium manganate (V) $K_3MnO_4$ , sodium manganate (V) $Na_3MnO_4$ , ammonium permanganate $NH_4MnO_4$ , barium permanganate $Ba(MnO_4)_2$ , calcium permanganate $Ca(MnO_4)_2$ , cesium permanganate $CsMnO_4$ , lithium permanganate $LiMnO_4$ , magnesium permanganate $Mg(MnO_4)_2$ , potassium permanganate $KMnO_4$ , rubidium permanganate $RbMnO_4$ , silver permanganate $AgMnO_4$ , sodium permanganate $NaMnO_4$, zinc permanganate $Zn(MnO_4)_2$ , potassium double salt of manganate (VI) and manganate (VII) $KMnO_4 . K_2MnO_4$ ; manganese (II) carbonate $MnCO_3$ , manganese (II) nitrate $Mn(NO_3)_2$ , manganese (II) sulfate $MnSO_4$ , manganese (II) dihydrogenphosphate $Mn(H_2PO_4)_2$ , manganese tetraborate $MnB_4O_7$ ; manganese (II) acetate $Mn(C_2H_3O_2)_2$ , manganese (III) acetate $Mn(C_2H_3O_2)_3$ ; manganese acetylacetonate $Mn(C_5H_7O_2)_3$ , manganese decacarbonyl $Mn(CO)_{10}$, methylcyclopentadienylmangantricarbonyl $C_9H_7Mn(CO)_3$ . More effective of these manganese compounds are potassium permanganate, sodium permanganate, ammonium permanganate, dimanganese heptoxide, manganese sulfate, manganese carbonate, and manganese nitrate.

According to a preferred aspect of the method of the invention, a liquid containing one or more of the named manganese compounds dissolved or suspended therein is applied to the surfaces of the wetted parts of the reactor such as reactor walls and stirrers, before the monomer to be polymerized is charged in the reactor. The liquid employed to dissolve or disperse the manganese compound in it may be water or a water-miscible organic solvent such as alcohols, esters, and ketones, or a mixture of two or more of these solvents.

The application liquid is prepared by dissolving or dispersing one or more manganese compound in an aqueous or organic solvent. This application liquid is applied in any convenient manner to the reactor walls and other parts which are contacted with the monomer during the polymerization, such as the shaft and blades of the stirrer. Preferably, the application liquid is applied at a temperature higher than 40 °C, more preferably between 40 °C and 100 °C, and is kept in continuous contact with the wetted parts for more than ten minutes, more preferably for more than 30 minutes. Excess application liquid remaining after this treatment is ordinarily discharged from the reactor.

The application liquid can be heated prior to applying it to the reactor parts, or by filling the reactor with the application liquid and then heating the liquid, or by spraying the application liquid onto the wetted parts and then heating the jacket of the reactor. If the temperature. to which the application liquid is heated is lower than 40 °C or the application time is shorter than 10 minutes, a decrease in the polymer deposition on the reactor parts may not occur. The concentration of the manganese compound in the application liquid ordinarily is 0.1 to 5.0 wt.%, e.g., 0.1 to 3.0 wt.%, preferably 0.3 to 3.0 wt.%, and more preferably 0.5 to 1.0 wt.%. If the concentration in the application liquid is too low, it becomes difficult to effectively prevent polymer deposition on the reactor walls, etc.; conversely, if the concentration of the manganese compound is too high, the result is such that the greater the concentration of the manganese compound the heavier the deposition of the polymer. As noted above, increased polymer deposition decreases the quality of the product polymer.

By observing the changes in color and gloss of the surfaces of the wetted parts, it is possible to determine when the formation of a film or coating of the manganese compound over the surfaces has occurred.

When the treatment of the surfaces of the wetted parts with the manganese compound is completed, the surfaces are preferably washed with water to remove any easily removable manganese compound and/or solvent. Thereafter, the polymerization is conducted in a conventional manner, e.g., the reactor is charged with aqueous medium, monomer(s) with ethylenic linkage, a polymerization initiator, and other necessary additives such as a dispersion agent.

The method of the present invention can be effectively employed in conjunction with the polymerization of various kinds of ethylenically unsaturated monomers. Examples of such monomers include vinyl halides such as vinyl chloride; vinyl esters such as vinyl acetate and vinyl propionate; acrylic and methacrylic acids and esters and salts thereof; maleic and fumaric acids and esters thereof, and maleic and fumaric anhydrides; acrylonitrile, vinylidene halides, and vinyl ethers.

The method of the invention is applicable to reactors and parts employed therein made of various kinds of materials such as stainless steel, and to such reactors lined with glass.

The method of the invention is effective in inhibiting and preventing polymer deposition, irrespective of the type of polymerization; for example, the polymerization may be suspension polymerization, emulsion polymerization, solution polymerization, and block polymerization.

Any additives that are commonly added to the polymerization system can be added to the polymerization system for which the method of the invention is employed without adversely affecting the effectiveness of the method. For example, the method of the invention is effective in the presence of the following additives in the polymerization system: suspending agents such as partially saponified products of polyvinyl alcohol, methyl cellulose, polyacrylic acid; solid dispersing agents such as calcium phosphate and hydroxyapatite; anionic emulsifiers such as sodium laurylsulfonate, sodium dodecylbenzenesulfonate, and sodium dioctyl sulfosuccinate; non-ionic emulsifiers such as sorbitan monolaurate and polyoxyethylene alkyl ether; fillers such as calcium carbonate and titanium dioxide; stabilizing agents such as tribasic lead sulfate, calcium stearate, dibutyltin dilaurate, and dioctyltin mercaptide; lubricants such as rice wax and stearic acid; plasticizers such as DOP and DBP; chain transfer agents such as trichloroethylene and mercaptans; pH regulators; and polymerization catalysts (initiators) such as diisopropylperoxy dicarbonate,$\alpha,\alpha$-azobis-2,4-dimethyl valeronitrile, lauroyl peroxide, potassium persulfate, cumene hydroperoxide, and p-menthane hydroperoxide. The effectiveness of the inventive method is little affected by the kinds and amounts of these additive ingredients.

Polymerization reactions in which polymer deposition is particularly effectively prevented by the method of the invention, are suspension polymerization and emulsion polymerization employing a vinyl halide such as vinyl chloride, or vinylidene halide, or a mixture of monomers mainly composed of these monomers.

3

The method of the invention is also particularly effective when employed for the polymerizations conducted in a stainless steel-made reactor in which beads or a latex of a polymer such as polystyrene, polymethylmethacrylate, and polyacrylonitrile, or a synthetic rubber such as SBR, NBR, CR, IR, and IIR (which are usually manufactured by emulsion polymerization), or an ABS resin is manufactured.

Examples

In the following examples, the method of the present invention is illustrated in detail.

Preparation of prepolymer

The prepolymer employed in the following examples was prepared in the following manner.

A reaction vessel was charged with 6,000 g of styrene, 720 g of polybutadiene rubber, 480 g of mineral oil (CP-50 manufactured by Idemitsu Kosan Co., Ltd.), and 6,000 g of n-dodecylmercaptan, and the mixture was kept at a temperature of 115 °C for 5 hours, whereby a prepolymer was obtained.

Examples 1 through 12, and Comparative Example 1

In each example, a stainless stell reaction vessel of 20-liter capacity equipped with a stirrer was charged with 18 liters of water and a selected amount of a manganese compound, which were then mixed together by the stirrer to obtain a treatment liquid. The reaction vessel was then heated for a selected period of time, whereafter the treatment liquid was discharged from the reaction vessel, and the reaction vessel was washed with water. Only in Comparative Example 1 was the addition of manganese compound omitted. Table 1 shows the kinds of the manganese compound used, the concentration of the manganese compound in its water solution, the temperature at which the solution was heated, and the length of the time during which the solution was heated.

The thus treated reaction vessel was then charged with 7,000 g of water, 7,000 g of above-explained prepolymer, 70 g of hydroxyapatite, 0.14 g of sodium dodecylbenzenesulfonate, 17.5 g of benzoyl peroxide, and 10.5 g of benzoyl hydroperoxide-t-butyl; the mixture was heated at 92 °C for 3.5 hours, and then at 135 °C for one hour, whereby polymer was produced.

After this polymerization, the amount of the polymer deposited on the inner walls of the reaction vessel as scale was measured, and the result is shown in Table 1.

Examples 13 through 15, and Comparative Example 2

In each example, a stainless steel reaction vessel of 1000-liter capacity equipped with a stirrer was charged with 900 liters of water and a selected amount of a manganese compound, which were then mixed together by the stirrer to obtain a treatment liquid. Thus, the inner walls of the reaction vessel and other parts which are contacted by the reaction mixture during polymerization were wetted with the treatment liquid. Then, the reaction vessel was heated for a certain period of time, whereafter the treatment liquid was discharged from the reaction vessel, and the interior of the reaction vessel was flushed with water. Only in Comparative Example 2 was the addition of manganese compound omitted. Table 2 shows the kind of the manganese compound used, the concentration of the manganese compound in its water solution, the temperature at which the solution was heated, and the length of the time during which the solution was heated.

The thus treated reaction vessel was then charged with 400 kg of water, 260 kg of styrene monomer, 140 kg of acrylonitrile monomer, 400 g of saponified product of polyacrylamide, and 1.2 kg of $\alpha,\alpha'$-azobisisobutyronitrile; the mixture was heated at 90 °C for 5 hours, whereby polymer was produced.

After this polymerization, the amount of the polymer deposited on the inner walls of the reaction vessel as scale was measured, and the result is shown in Table 2.

The results show that the method of the invention is effective in preventing polymer from depositing on the wetted parts of a polymerization reactor even when the polymerization employs ethylenically unsaturated monomer(s). It is also noted that the method of the invention was successful in preventing deposition of polymer in a polymerization system comprising $\alpha$-methyl styrene, acrylic ester, and acrylonitrile.

It has been determined that if the wetted parts of the reaction vessel is treated with a liquid containing a suitable manganese compound after every batch or even after several batches, the reactor can be used repeatedly without polymer deposition on the reactor parts occuring.

Also, according to the invention, since no deposition-preventive agents need be added to the system during polymerization the product polymer will retain high purity. When optimum conditions are employed, e.g., when the dosage of the manganese compound used in the treatment liquid is appropriate, polymer deposition is completely prevented.

Table 1

| | | Manganese Compound | | heating condition | | scale amount (g/$m^2$) |
|---|---|---|---|---|---|---|
| | | formula | concentration (wt%) | temperature (°C) | time (hr) | |
| Examples | 1 | $KMnO_4$ | 0.01 | 90 | 1 | 80 |
| | 2 | $KMnO_4$ | 0.1 | 90 | 1 | 3 |
| | 3 | $KMnO_4$ | 1.0 | 90 | 1 | 0 |
| | 4 | $KMnO_4$ | 3.0 | 90 | 1 | 0 |
| | 5 | $KMnO_4$ | 0.5 | 90 | — | 0 |
| | 6 | $KMnO_4$ | 0.5 | 60 | 0.2 | 15 |
| | 7 | $KMnO_4$ | 0.5 | 40 | 0.2 | 60 |
| | 8 | $KMnO_4$ | 0.5 | 20 | 0.2 | 2 |
| | 9 | $Mn_2O_7$ | 0.5 | 90 | 0.5 | 8 |
| | 10 | $MnCO_3$ | 0.5 | 90 | 0.5 | 5 |
| | 11 | $Mn(NO_3)_2 \cdot 6H_2O$ | 0.5 | 90 | 0.5 | 20 |
| | 12 | $MnSO_4$ | 0.5 | 90 | 0.5 | 1150 |
| Comparative Ex.1 | | — | — | — | — | 1150 |

EP 0 327 202 A2

Table 2

| | | Manganese Compound | | heating conditon | | scale amount (g/m²) |
|---|---|---|---|---|---|---|
| | | formula | concentration (wt%) | temperature (℃) | time (hr) | |
| Examples | 13 | KMnO₄ | 1.0 | 90 | 1 | 0 |
| | 14 | NH₄MnO₄ | 2.0 | 70 | 0.5 | 3 |
| | 15 | Mn₂O₇ | 0.5 | 50 | 0.5 | 15 |
| Comparative Ex.2 | | — | — | — | — | 980 |

## Claims

1. A method for inhibiting polymer build-up in a reactor in which a liquid polymerization mixture comprising a monomer is polymerized, on the parts of the reactor wetted by the polymerization mixture, characterised by coating the parts prior to the polymerization with an amount of a source of manganese ions effective to inhibit polymer build-up.

2. A method as claimed in Claim 1, characterised in that the source of the manganese ions is a manganese oxide, a manganese hydroxide, a manganese halide, a manganese oxyacid, a manganese salt of an inorganic acid or an organic acid, or a mixture thereof.

3. A method as claimed in Claim 2, characterised in that the source of the manganese ions is $MnO$, $Mn_3O_4$, $\alpha M_2O_3$, $MnO_2$, $MnO_3$, $Mn_2O_7$, $MnO_4$, $Mn_5O_8$ or a mixture thereof.

4. A method as claimed in Claim 2 , characterised in that the source of the manganese ions is $Mn(OH)_2$, hydrated $MnO(OH)$ or a mixture thereof.

5. A method as claimed in Claim 2, characterised in that the source of the manganese ions is $MnF_2$, $MnF_3$, $MnCl_2$, $MnCl_3$, $MnBr_2$, $MnI_2$, or a mixture thereof.

6. A method as claimed in Claim 2, characterised in that the source of the manganese ions is $K_2MnO_4$, $Na_2MnO_4$, $BaMnO_4$, $K_2MnO_3$, $Ba_3(MnO_4)_2$, $K_3MnO_4$, $Na_3MnO_4$, $NH_4MnO_4$, $Ba(MnO_4)_2$, $Ca(MnO_4)_2$, $CsMnO_4$, $LiMnO_4$, $Mg(MnO_4)_2$, $KMnO_4$, $RbMnO_4$, $AgMnO_4$, $NaMnO_4$, $Zn(MnO_4)_2$, $KMnO_4 . K_2MnO_4$, $MnCO_3$, $Mn(NO_3)_2$, $MnSO_4$, $Mn(H_2PO_4)_2$, $MnB_4O_7$; $Mn(C_2H_3O_2)_2$, $Mn(C_2H_3O_2)_3$, $Mn(C_5H_7O_2)_3$, $Mn(CO)_{10}$, $C_9H_7Mn(CO)_3$ or a mixture thereof.

7. A method as claimed in any of Claims 1 to 6, characterised in that the parts are coated by wetting the parts with a liquid comprising a manganese compound, preferably $K_2MnO_4$, and a solvent, the manganese compound being dissolved or suspended in the solvent.

8. A method as claimed in Claim 7, characterised in that the solvent and the manganese compound are charged into the reactor and the reactor is then heated until a coating of the manganese compound is deposited on the reactor parts.

9. A method as claimed in Claim 7 or 8, characterisd in that the liquid containing the manganese compound is heated to a temperature about $40°C$, preferably from $40°C$ to $100°C$.

10. A method as claimed in any of Claims 7 to 9, characterised in that the concentration of the manganese compound in the liquid is 0.1 to 5.0 wt%, preferably 0.3 to 3.0 wt%, more preferably 0.5 to 1.0 wt%.

11. A method as claimed in any of Claims 7 to 10, characterised in that the solvent is (1) water; or (2) a water-miscible organic solvent, preferably an alcohol, an ester or a ketone.

12. A method as claimed in Claim 7, characterised in that the solvent and the manganese compound are charged into the reactor and the reactor is then heated until a coating of the manganese compound is deposited on the reactor parts; in that the liquid containing the manganese compound is heated to a temperature from $40°C$ to $100°C$; and in that the concentration of the manganese compound in the liquid is 0.3 to 3.0 wt%; wherein the solvent is preferably water, and/or the manganese compound is preferably $K_2MnO_4$.

13. A reactor whose parts which are wetted by the polymerisation mixture employed in polymerisations conducted therein bear on the surfaces thereof a coating of a manganese compound.